Europäisches Patentamt

European Patent Office

Office européen des brevets

(11) Publication number: 0 245 953 A1

## EUROPEAN PATENT APPLICATION

(21) Application number: 87303124.9

(51) Int. Cl.4: **G11B 7/26** , G11B 7/24

(22) Date of filing: 09.04.87

(30) Priority: 14.04.86 GB 8609027
09.05.86 GB 8611353

(43) Date of publication of application:
19.11.87 Bulletin 87/47

(84) Designated Contracting States:
AT BE CH DE ES FR GB GR IT LI LU NL SE

(71) Applicant: PLASMON DATA SYSTEMS N.V.
De Ruyterkade 58a
Curacao(AN)

(72) Inventor: Longman, Robert James
14 St. John's Road
Coton Cambridge CB3 7PM(GB)
Inventor: Helfet, Peter Roy
5 Meadow Drive
London NW4 1SD(GB)

(74) Representative: Abrams, Michael John et al
HASELTINE LAKE & CO. Hazlitt House 28
Southampton Buildings Chancery Lane
London WC2A 1AT(GB)

(54) Manufacture of optical data storage discs.

(57) A method of manufacturing an optical data storage disk is disclosed in which two similar disk members are secured in back-to-back relationship, which comprises the steps of: (a) positioning the disk members in the desired back-to-back relationship and concentric with one another; (b) effecting a first bond between the disk members close to their centres; and (c) effecting a second bond between the disk members at or close to their periphery, at least one of said first and second bonds being effected by means of a resilient bonding arrangement, whereby the tendency of the edges of the disk to vibrate is reduced.

Preferably, the disks are located concentrically prior to effecting said first bond by a method comprising: holding the disks mutually parallel in opposed relationship and spaced apart by a distance in the range 0.2 to 1.5 millimeters; directing a coherent or non-coherent beam of light uniformly over a predermined area of the disks where each of the disks carries regularly arranged grooves the pitch (period) of which is in the range 15 to 50 microns; and observing the intensity of light transmitted through both disks at three or more locations which are equidistant from the axis of location of the disks; and adjusting the relative position of the disks about said axis of location until the measured intensities at each of the observing stations are the same.

FIG. 1

# IMPROVEMENTS RELATING TO THE MANUFACTURE OF OPTICAL DATA STORAGE DISKS

This invention relates to the production of optical data storage disks, and more particularly, is concerned with a method of producing disks with data storage areas on both sides thereof and which are resistant to vibration.

Conventional optical data storage disks store information on only one of the disk surfaces. The other disk surface is generally planar. In order to increase the optical storage density, "double-sided" disks have been produced by bonding together two ordinary or single sided disks. Because the positioning of disk surface features relative to an optical reading head needs to be accurate to within the micron range in many instances, the procedure adopted for bonding together the two disks must be exceptionally accurate. Furthermore, it is important to avoid resonances which might occur when disks are subject to vibration during use, particularly in systems mounted in mobile environments such as in vehicles or airplanes. Resonant vibration of disks during their use can lead to tracking errors and other problems which can seriously degrade disk and/or system performance. Also, the two component disks need to be exactly concentric in order to avoid tracking or reading errors.

According to one aspect of the present invention, there is provided a method of manufacturing an optical data storage disk in which two similar disk members are secured in back-to-back relationship, which comprises the steps of: (a) positioning the disk members in the desired back-to-back relationship and concentric with one another; (b) effecting a first bond between the disk members close to their centres; and (c) effecting a second bond between the disk members at or close to their periphery, at least one of said first and second bonds being effected by means of a resilient bonding arrangement, whereby the tendency of the disk to vibrate is reduced.

Generally, at least the second (peripheral) bond will be a resilient bond. This we have found produces an acceptably low level of edge vibration.

Preferably each of the first and second bonds is an annular bond. It is also preferred for the first bond to be effected between integral spacer lugs formed on each of the disk members so as to co-operate to define between then, when the members are juxtaposed, a small gap suitable for receiving a curable adhesive. The spacer lugs may be coated, when juxtaposed, with an adhesive which can be cured by ultra-violet light or by ultrasonic welding. Epoxy resins are examples of such adhesives. Alternatively, where the first bond is to be a resilient bond, the techniques mentioned below in relation to the second bond may be utilised.

The second bond is preferably effected by means of a flexible adhesive with damping properties, e.g. a silicone rubber or a hot melt urethane. Alternatively, the second bond can use an adhesive (regardless of its resilient properties) deposited on corresponding juxtaposed areas of the two disk members and having a resilient structure, e.g. a rubbery polymeric O-ring, between the two adhesive areas.

The invention also provides a data storage disk fabricated by the method defined above.

We have also devised a new technique for determining whether the two component disks are accurately centred prior to their being bonded together. This technique relies on diffraction effects. More particularly, in another aspect the present invention provides a method of determining whether two similar optical data storage disks are located concentrically, which comprises holding the disks mutually parallel in opposed relationship and spaced apart by a distance in the range 0.2 to 1.5 millimeters; directing a coherent or non-coherent beam of light uniformly over a predetermined area of the disks where each of the disks carries regularly arranged grooves the pitch (period) of which is in the range 15 to 50 microns; and observing the intensity of light transmitted through both disks at three or more observing stations which are equidistant from the axis of location of the disks; and adjusting the relative position of the disks about said axis of location until the measured intensities at each of the observing stations are the same.

Light passing through the predetermined area of the two disks where there are grooves (which act as centering grooves) results in the generation of Moire fringes. These can be observed from above the two disks and preferably observations take place at four positions which are equidistant from one another and from the axis of location of the disks.

The tracking grooves in typical commercial optical storage disks have a pitch of a few microns (1.6 to 2.5 microns is the normal range). Because of diffraction effects, Moire fringes from grooves of this pitch cannot be used to achieve centering of two disks if the spacing between the disks exceeds a few microns. For this reason a relatively coarse pitch groove structure must be used to allow typical gaps between disks of 0.2 to 1.5 millimeters, more preferably of 0.4 to 1 millimeter, to be used.

The required centering grooves can be produced at the same time as the data tracking grooves are produced, thus ensuring the concentricity of the two areas. Advantageously, the centering grooves are located close to the centre of each disk rather than at its periphery.

Preferably, the disks are held in an adjustable clamping mechanism during performance of the centering method described above. The separation between the disks is preferably about 0.5 millimeters. Preferably corresponding regions of the two component disks at face-to-face positions are formed with a material which can be treated to cause a rapid bonding between the two disks. This can be achieved, for example, by using a UV-curable resin between integral spacer lugs formed on each of the two disk members close to their centres, as described above in relation to the first aspect of the invention; then once the two disks are accurately centred, UV radiation is directed at the specific areas to form a fast bond between the two disks. They may then be removed from the adjustable clamping assembly and the further bonding between the disks at or close to their outer edge may be effected.

The clamping assembly which is preferably used in this invention comprises a collet which is movable in direction parallel to and perpendicularly to the disk surfaces. Located about the collet is a reference location for the lower of the two disks and above this is a frustoconical top disk clamp. In an alternative arrangement, the upper disk clamp is movable instead of the lower disk clamp. The separation between the top disk clamp and the lower disk locating member determines the separation between the two disks when they are in position on the clamping arrangement.

For a better understanding of the invention, and to show how the same may be carried into effect, reference will now be made, by way of example, to the accompanying drawings, in which:

Figure 1 shows a schematic cross-section through a double-sided optical data storage disk produced in accordance with this invention;

Figure 2 shows an enlarged schematic cross-section through a part of two opposed component optical data storage disks;

Figure 3 shows an enlarged schematic cross-section through two opposed optical data storage disks held in a clamping assembly in accordance with the method of this invention;

Figure 4 is a schematic plan view on reduced scale of the arrangement depicted in Figure 3; and

Figure 5 illustrates a resonance test carried out on a double-sided disk of the type illustrated in Figure 1.

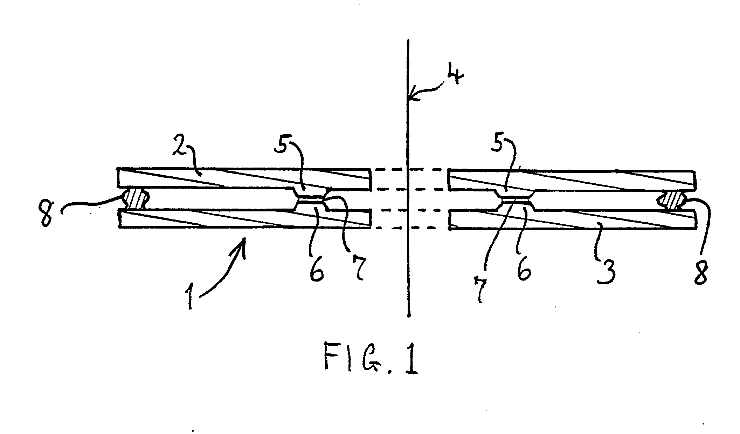

Referring now to Figure 1 of the drawings, there is shown an optical data storage disk indicated generally at 1 and made of two identical disk members 2 and 3 which are secured together in back-to-back relationship and are exactly concentric about their central axis 4. The members 2 and 3 are each formed with annular spacer lugs 5 and 6 between which there is a rigid epoxy resin bond. This is formed by UV-irradiation of an epoxy resin adhesive 7 while the members 2 and 3 are positioned in the desired configuration. As shown, the spacer lugs 5 and 6 and hence the rigid bond 7 are located close to the innermost part of the disk members.

At the outer periphery of the disk members there is a resilient bond 8 which extends as an annulus around the disk. This bond 8 is formed of a flexible adhesive having damping properties - e.g. a silicone rubber.

We have found that a disk possessing the structure described above is substantially better than disks available heretofore in withstanding operating conditions which are subject to vibration. The tendency for disks to resonate (e.g. to "ring") when vibrated at certain frequencies is obviated or at least ameliorated.

In a modification of the disk structure shown in Figure 1, the bond 7 is produced so as to be a resilient bond. This can be achieved for example, by using a hot melt urethane as the bonding agent in place of epoxy resin.

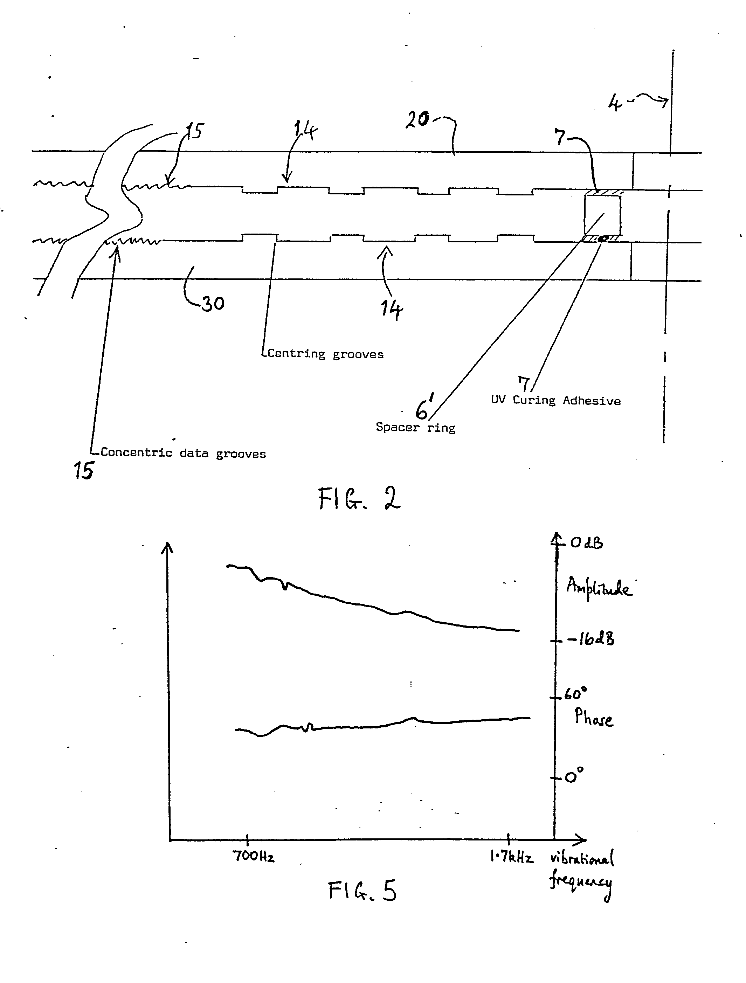

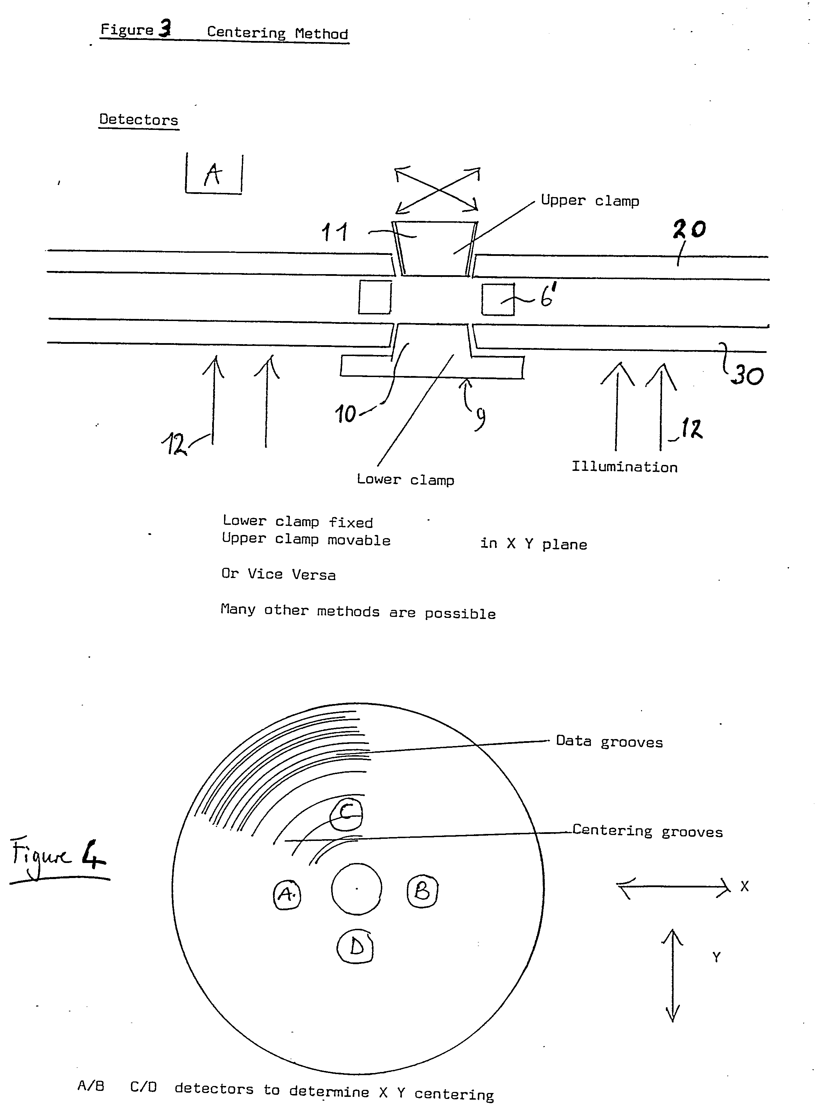

Referring now to Figures 2, 3 and 4 of the drawings, a method of achieving the precise centering of the two component disks 20 and 30 will be described. In Figures 2 and 3, the disks 20 and 30 are identical to the disks 2 and 3 of Figure 1 except that instead of the provision of lugs 5 and 6 integral with the disks 2 and 3, respectively, a rigid spacer ring 6' is interposed between the disks 20 and 30 and bonded thereto by two adhesive layers 7. Each disk includes a plurality of concentric centering grooves 14 which, in this embodiment, have a pitch (period) of 30 microns. These centering grooves occupy an annular band adjacent to the disk centre. Outwardly from this area there are located a series of much finer concentric data grooves 15. Spacer ring 6' is coated on opposite faces with a thin layer of an adhesive 7 which can be cured by ultra violet light.

As can be seen from Figure 3, lower disk 30 fits onto a frustoconical portion 10 of a lower clamp part 9. A corresponding frustoconical upper clamp unit 11 is arranged to be movable in the X-Y directions - that is the two orthogonal directions in the plane of Figure 4.

Four photodetectors A, B, C and D (of which only one is shown in Figure 3) are positioned equidistant from one another and from axis 4 and are located over the centering grooves 14; their outputs are connected to a comparator circuit (not shown). Illumination indicated at 12 is directed from beneath the two disks normal to their common plane. On passing through the areas of the disks which have the centering grooves 14, Moire fringes are produced and the intensity of illumination at each of detectors A, B, C and D is measured. Upper clamp unit 11 is then moved, preferably under servo control, so as to equalise the intensity of illumination received by each of the detectors. When this condition is reached, a beam of ultra violet radiation is directed first at one side and then at the other side of the spacer ring 6' so as to cure the adhesive layers 7, thereby bonding disks 20 and 30 together in the desired concentric configuration. The disks may then be removed from clamping assembly 9, 10, 11 and further bonding at the periphery of the disks may be carried out to generate a double-sided disk of the type shown in Figure 1.

Referring now to Figure 5, there is shown a - schematic plot obtained by resonance testing of a disk such as that of Figure 1 having both inner and outer bonds formed as resilient bonds. The upper trace in Figure 5 represents the amplitude of vibrations measured at a point midway along a radius on the disk at different applied frequencies; and the lower trace shows the phase difference between the applied vibrations and those of the disk, again measured at a point midway along a radius on the disk. The results obtained show substantially constant phase and no amplitude peaks over the frequency range 700Hz - 1.7KHz. The overall amplitude level is acceptably low. This represents excellent non-resonant behaviour.

## Claims

1. A method of manufacturing an optical data storage disk in which two similar disk members are secured in back-to-back relationship, which comprises the steps of: (a) positioning the disk members in the desired back-to-back relationship and concentric with one another; (b) effecting a first bond between the disk members close to their centres; and (c) effecting a second bond between the disk members at or close to their periphery, at least one of said first and second bonds being effected by means of a resilient bonding arrangement, whereby the tendency of the disk to vibrate is reduced.

2. A method according to claim 1, wherein said second bond is a resilient bond.

3. A method according to claim 1, wherein each of said first and second bonds is a resilient bond.

4. A method according to claim 1, wherein said first bond is a rigid bond.

5. A method according to claim 4, wherein said adhesive for generating said first bond is of the type curable by ultra-violet light or by ultrasonic welding.

6. A method according to claim 5, wherein said adhesive is an epoxy resin.

7. A method according to any preceding claim, wherein the first and second disk members are centred prior to effecting said first bond between them by a method comprising: holding the disks mutually parallel in opposed relationship and spaced apart by a distance in the range 0.2 to 1.5 millimeters; directing a coherent or non-coherent beam of light uniformly over a predermined area of the disks where each of the disks carries regularly arranged grooves the pitch (period) of which is in the range 15 to 50 microns; and observing the intensity of light transmitted through both disks at three or more locations which are equidistant from the axis of location of the disks; and adjusting the relative position of the disks about said axis of location until the measured intensities at each of the observing stations are the same.

8. A method of determining whether two similar optical disks are located concentrically, which comprises holding the disks mutually parallel in opposed relationship and spaced apart by a distance in the range 0.2 to 1.5 millimeters; directing a coherent or non-coherent beam of light uniformly over a predermined area of the disks where each of the disks carries regularly arranged grooves the pitch (period) of which is in the range 15 to 50 microns; and observing the intensity of light transmitted through both disks at three or more locations which are equidistant from the axis of location of the disks; and adjusting the relative position of the disks about said axis of location until the measured intensities at each of the observing stations are the same.

FIG. 1

15

14

20

7

4

15

30

Centring grooves

6'
Spacer ring

7
UV Curing Adhesive

Concentric data grooves

15

## FIG. 2

0 dB

Amplitude

−16 dB

60°
Phase

0°

700 Hz

1·7 kHz

vibrational frequency

## FIG. 5

Figure 3    Centering Method

Detectors

A

Upper clamp

11

20

6'

10    9

30

12

Lower clamp

Illumination    12

Lower clamp fixed
Upper clamp movable        in X Y plane

Or Vice Versa

Many other methods are possible

Figure 4

Data grooves

C

Centering grooves

A    B

D

X

Y

A/B  C/D  detectors to determine X Y centering

## DOCUMENTS CONSIDERED TO BE RELEVANT

EP 87303124.9

| Category | Citation of document with indication, where appropriate, of relevant passages | Relevant to claim | CLASSIFICATION OF THE APPLICATION (Int. Cl.4) |
|---|---|---|---|
| A | EP - A1 - 0 139 354 (OPTICAL DISC CORPORATION) <br> * Fig. 4; claim 1; abstract * | 1,4,7, 8 | G 11 B 7/26 <br> G 11 B 7/24 |
| A | EP - A1 - 0 049 821 (TOKYO SHI-BAURA DENKI KABUSHIKI KAISHA) <br> * Fig. 2; abstract; claim 5 * | 1,4,7, 8 | |
| A | EP - A1 - 0 024 194 (DISCOVISION ASSOCIATES) <br> * Fig. 1; abstract; page 4, line 32 - page 5, line 1 * | 1,4,7, 8 | |
| A | EP - A2 - 0 109 245 (TOKYO SHI-BAURA DENKI KABUSHIKI KAISHA) <br> * Fig. 1-6; abstract * <br> ---- | 1,4,7, 8 | TECHNICAL FIELDS SEARCHED (Int. Cl.4) <br><br> G 11 B 7/00 <br> B 41 M 5/00 |

The present search report has been drawn up for all claims

| Place of search | Date of completion of the search | Examiner |
|---|---|---|
| VIENNA | 14-07-1987 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82